# EUROPEAN PATENT APPLICATION

(11) **EP 3 309 724 A1**
(43) Date of publication of application: **18.04.2018**
(21) Application number: 17195930.7
(22) Date of filing: 11.10.2017
(51) Int. Cl.: G06Q 10/06, G06Q 10/10, G06Q 50/06

(54) **METHODS AND SYSTEMS RELATED TO ALLOCATING FIELD ENGINEERING RESOURCES FOR POWER PLANT MAINTENANCE**

(30) Priority: 13.10.2016 US 201615292489
(71) Applicant: General Electric Company, Schenectady, NY 12345 (US)
(72) Inventor: NAMBOOTHIRI, Rajeev, 560066 Bangalore, Karnataka (IN); BOLLAPRAGADA, Srinivas, Niskayuna, NY New York 12309 (US); RASHEED, Adam, Niskayuna, NY New York 12309 (US); NARAYANAN, Babu Ozhur, 560066 Bangalore, Karnataka (IN); ALTASSAN, Ibraheem Mansour, 11549 Dubai (AE); KHATTAB, Ahmed Yousry Mostafa, 11549 Dubai (AE); ELDIN, Tariq Sharaf, 11549 Dubai (AE); SONBOL, AMR Mahmoud, 11549 Dubai (AE); JAMSHED, Muhammad, 54660 Lahore (PK); KILIBOZ, Can, 11549 Dubai (AE)
(74) Representative: Fischer, Michael Maria

(57) **Abstract**

A system (10) for allocating field engineers to perform maintenance tasks according to a generated allocation schedule (49), the maintenance tasks occurring during a planning cycle at customer power plants dispersed within a territory. The system (10) may include a database (41) that stores data related to field engineer and task constraints. The system (10) may further include a computing device configured to: receive an input defining an objective function; using the database (41), determine an occurring group of the maintenance tasks during the planning cycle; using the database (41), determine an available group of the field engineers during the planning cycle; using the database (41), import the task constraints that correspond to the occurring group of maintenance tasks; using the database (41), import the field engineer constraints that correspond the available group of the field engineers; given the imported task and field engineer constraints, generate an optimized version of the allocation schedule (49) pursuant to the objective function.

## Description

### BACKGROUND OF THE INVENTION

The invention of the present application relates generally to resource allocation and, more particularly, to methods and systems related to optimizing the allocation of field engineering resources for power plant maintenance.

In electric power systems, a number of remote power plants generate electricity that is then distributed over common transmission lines to residential and commercial customers. As will be appreciated, thermal generating units, such as gas turbines, steam turbines, and/or combined-cycle plants, are relied on to generate a significant portion of the power that consumers and industry require. The power plants within such systems undergo periodic planned outages during which one or more of the power plant's generating units are shut down so that outage or maintenance tasks may be performed. In addition to planned outages, power plants may experience unplanned outages due to unforeseen circumstances, such as a component or system failure. In either case, such maintenance outages typically require mobile field engineering personnel to travel to the power plant site in order to carry out one or more maintenance tasks.

Typically, a business entity, such as a field services company, may hire many such field engineers and provide their services to a network or fleet of power plants under a contractual service agreement. This company, thus, may employ hundreds of the field engineers and direct them as mobile assets according to a schedule of upcoming maintenance tasks. To do this, the field services company may have a resource manager that organizes the mobilization and assignment of the field engineers across the fleet of customer power plants, which often are dispersed across a wide geographic region or territory. This territory may span multiple countries and, within each of these countries, there may be many of the customer power plants, each of which having a unique configuration.

In operation, the resource manager for the field services company assigns field engineers to maintenance tasks based on a variety of relevant criteria and constraints, such as, for example, the skill required to perform the maintenance task, the skill of the field engineer, and the availability of the field engineer. More specifically, each of field engineers may be characterized by a unique skill set that defines the types of maintenance tasks that he is competent to perform. In addition, the field engineer may have a skill level and/or a set of sub-skills associated with each of the skills within his skill set, which further defines his proficiency. Further, the fact that the customer power plants are dispersed across international borders means that restrictions associated with traveling between countries becomes an issue. For example, based on the nationality and background of each field engineer, unique travel restrictions may apply. As will be seen, many other constraints may affect the availability of field engineers for particular field assignments.

In known systems and methods, the resource manager of the field services company may manually assign field engineers to maintenance tasks, both from a strategic or long-term perspective as well as a day-to-day or operational one. This manual process is cumbersome and complex and, as will be appreciated, often results in sub-optimal allocation of resources. These sub-optimal allocations incur increased costs for the field services company, including additional labor and travel costs. As a result of this, there is an ever-growing demand for tools for automatically scheduling, optimizing, and/or improving the allocation process of mobile assets or field engineering resources in the power generating industry as well as other similar commercial applications.

### BRIEF DESCRIPTION OF THE INVENTION

The present application thus describes a system for generating an allocation schedule by which field engineers are allocated to perform maintenance tasks occurring during a defined planning cycle at customer power plants dispersed within a territory. The allocation schedule may include a list of assignments by which the field engineers are assigned to complete each of the maintenance tasks. The system may include a database configured to store data related to constraints, including at least: field engineer constraints that define constraints for each of the field engineers; and task constraints that define constraints for each of the maintenance tasks. The system may further include remote modules for collecting and sending data related to the constraints to the database for storage therein, including at least: a field engineering module for collecting and sending data related to the field engineer constraints; and a power plant module for collecting and sending data related to the task constraints. The system may further include a computing device containing a processing unit which is configured to: receive an input defining the planning cycle; receive an input defining an objective function; using the data stored in the database, determine an occurring group of the maintenance tasks during the planning cycle; using the data stored in the database, determine an available group of the field engineers during the planning cycle; using the data stored in the database, import the task constraints that correspond to the occurring group of maintenance tasks; using the data stored in the database, import the field engineer constraints that correspond the field engineers within the available group of the field engineers; given the imported task constraints and the imported field engineer constraints, generate an optimized version of the allocation schedule pursuant to the objective function.

The present invention may further describe a computer-implemented method for allocating field engineers to perform maintenance tasks scheduled to occur during a planning cycle at customer power plants dispersed within a territory. The method may include the steps of: storing date on a database related to constraints including at least field engineer constraints that define the constraints for each of the field engineers and task constraints that define the constraints for each of the maintenance tasks; determining, via referencing the data stored in the database, an occurring group of the maintenance tasks during the planning cycle and each of the task constraints that correspond thereto; determining, via referencing the data stored in the database, an available group of the field engineers during the planning cycle and each of the field engineer constraints that correspond thereto; and given the task constraints and the field engineer constraints, generating an optimized version of the allocation schedule via an optimization process pursuant to an objective function.

These and other features of the present application will become more apparent upon review of the following detailed description of the preferred embodiments when taken in conjunction with the drawings and the appended claims.

### BRIEF DESCRIPTION OF THE DRAWINGS

Figure 1 shows a schematic diagram of a power system in which aspects of the present invention may be practiced.
Figure 2 is a schematic block diagram illustrating a system for optimizing the allocation of field engineering resources in accordance with aspects of the present invention.
Figure 3 is a flowchart illustrating a method for allocating field engineering resources in accordance with aspects of the present invention.
Figure 4 is a schematic block diagram of an exemplary operating environment for a system configured in accordance with the present invention.

### DETAILED DESCRIPTION OF THE INVENTION

Example embodiments of the invention will be described more fully hereinafter with reference to the accompanying drawings, in which some, but not all embodiments are shown. Indeed, the invention may be embodied in many different forms and should not be construed as limited to the embodiments set forth herein; rather, these embodiments are provided so that this disclosure will satisfy applicable legal requirements. Like numbers may refer to like elements throughout.

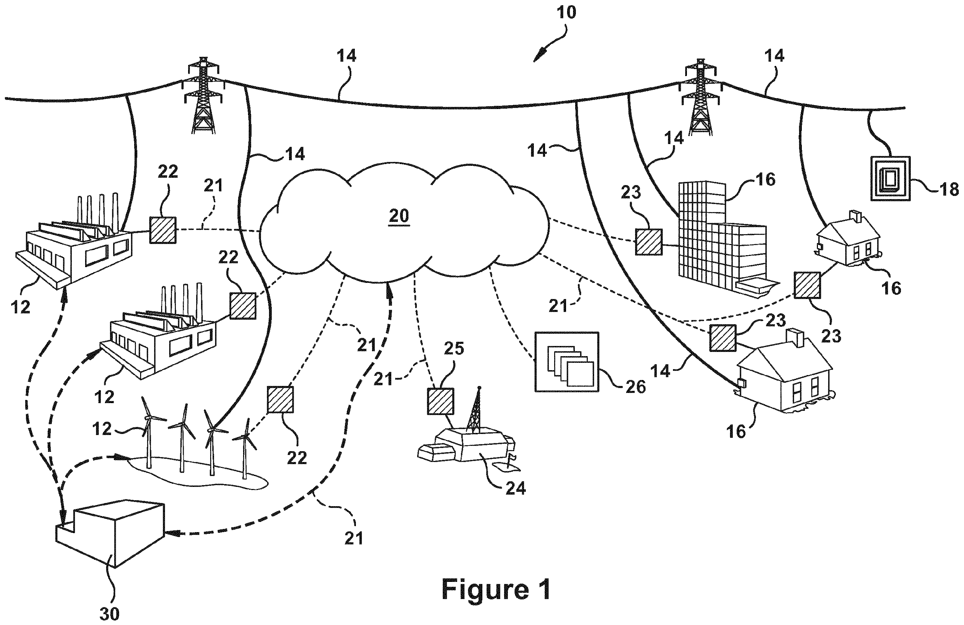

Figure 1, which is provided as background, illustrates a schematic representation of a power system 10 that provides an exemplary environment in which embodiments of the present invention may be practiced. As shown, the power system 10 includes several power generating plants ("power plants 12"), such as, for example, the illustrated wind and thermal power plants. It will be appreciated that thermal power plants may include generating units such as gas turbines, coal-fired steam turbines, and/or combined-cycle plants. In addition, the power system 10 may include other types of power plants (not shown), such as solar power installations, hydroelectric, geothermal, nuclear, wind, fuel cell, reciprocating engine, energy storage and/or any other suitable power sources now known or discovered hereafter and any combination of said systems. Within the power system 10, transmission lines 14 may connect the various power plants 12 to customers or loads 16. It should be understood that transmission lines 14 represent a grid or distribution network for the power system and may include multiple sections and/or substations as may be desired or appropriate. The power generated from the power plants 12 may be delivered via transmission lines 14 to the loads 16, which, for example, may include municipalities, residential, or commercial customers. The power system 10 may also include storage devices 18 that are connected to transmission lines 14 so to store energy during periods of excess generation.

The power system 10 also may include control systems or controllers 22, 23, 25 that manage or control the operation of several of the components contained therein. For example, a plant controller 22 may control the operation of each of the power plants 12. Load controllers 23 may control the operation of the different loads 16 that are part of the system. For example, a load controller 23 may manage the manner or timing of a customer's power purchase. A dispatch authority 24 may manage certain aspects of the operation of power system 10, and may include a power system controller 25 that controls the economic dispatch procedure by which load commitments are distributed among participating power plants. The controllers 22, 23, 25, which are represented by rectangular blocks, may be connected via communications lines or connections 21 to a communications network 20 over which data is exchanged. The connections 21 may be wired or wireless. It will be appreciated that the communications network 20 may be connected to or part of a larger communications system or network, such as the internet or a private computer network. In addition, the controllers 22, 23, 25 may receive information, data, and instructions from and/or send information, data, and instructions to data libraries and resources, which may be referred to herein generally as "data resources 26", through the communications network 20, or, alternatively, may store or house one or more such data repositories locally. The data resources 26 may include several types of data, including but not limited to: market data, operating data, maintenance data, and ambient conditions data. Market data includes information on market conditions, such as energy sales price, fuel costs, labor costs, regulations, etc. Operating data includes information relating to the operating conditions of the power plant or its generating units, such as temperature or pressure measurements within the power plant, air flow rates, fuel flow rates, etc., and may also include maintenance data and scheduling for the power plant's generating units. Ambient data includes information related to ambient conditions at the plant, such as ambient air temperature, humidity, and/or pressure. Market, operating, and ambient data each may include historical records, present condition data, and/or data relating to forecasts. For example, data resources 26 may include present and forecast meteorological/climate information, present and forecast market conditions, usage and performance history records about the operation of the power plant, maintenance data, and/or measured parameters regarding the operation of other power plants having similar components and/or configurations, as well as other data as may be appropriate and/or desired. In operation, for example, the power system controller 25 of dispatch authority 24 may receive data from and issue instructions to the other controllers 22, 23 within the power system 10. Each of the plant and the load controllers then controls the system component for which it is responsible and relays information about it to and receive instruction from the power system controller 25.

As discussed more below, the power system 10 may further include a field engineering or technical services company ("field services company 30") that provides technical field services to the several customer power plants 12. In order to meet the maintenance needs of the many power plants 12 that it serves, the field services company 30 may employ many types of mobile technical personnel or field engineers ("field engineers"), which are then allocated for travel to the different power plants 12 to perform various maintenance tasks per an agreed upon task and fee schedule. This type of arrangement may be made between separate companies or entities, or may be made internally and across divisions within the same company, and it should be appreciated that the concepts of the present invention may be employed within either situational case, as well as with other analogous commercial relationships or arrangements. Such service field services companies 30 typically include within their structure a resource manager that is responsible for managing, assigning, and mobilizing the field engineers to cover the maintenance tasks of the power plants 12 located within a defined geographic region.

According to exemplary embodiments of the present invention, a resource allocation system and method is proposed for improving or optimizing the allocation of field engineering resources in response to several defined constraints and according to several different objectives. In furtherance of the method and system of the present invention, field services company 30 may communicate with the various power plants 12 via connections 21 to the communication network 20. Such communication may include electronic or other communication between operators, managers, and other personnel, such as, for example, between a power plant service technician or maintenance manager ("maintenance manager), who manages the outages and maintenance for one or more of the power plants 12, and the resource manager at the field services company 30. Such communications may further include direct and automated electronic communication between the controllers 22 of the power plants 12 and one or more of the computer systems of the field services company 30. As will be seen, such communication may include information and data related to scheduled maintenance tasks or those already performed at the power plants 12 relative to both long and short-term planning cycles. Other communications and/or exchanges of data, such as any of those implied or necessary to carry out any of the functionality described herein should be understood as being part of the present invention and may take the any possible form, as might be envisioned by one of ordinary skill in the technical arts.

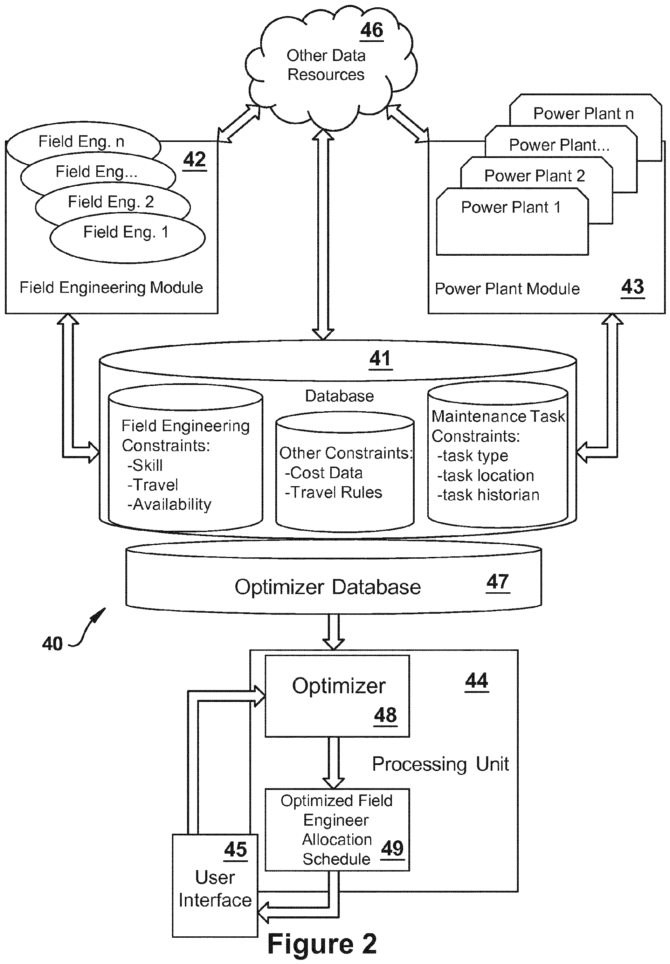

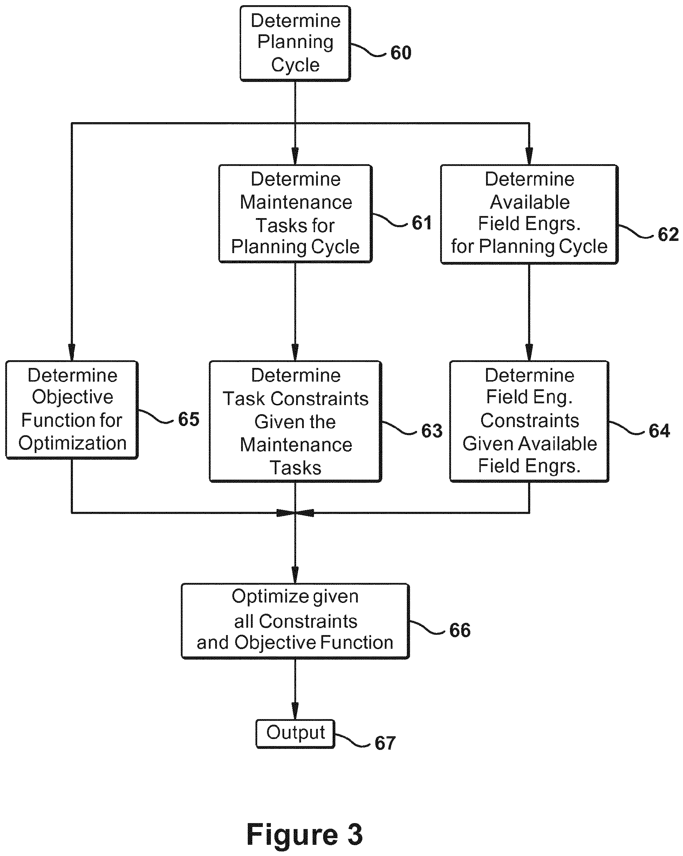

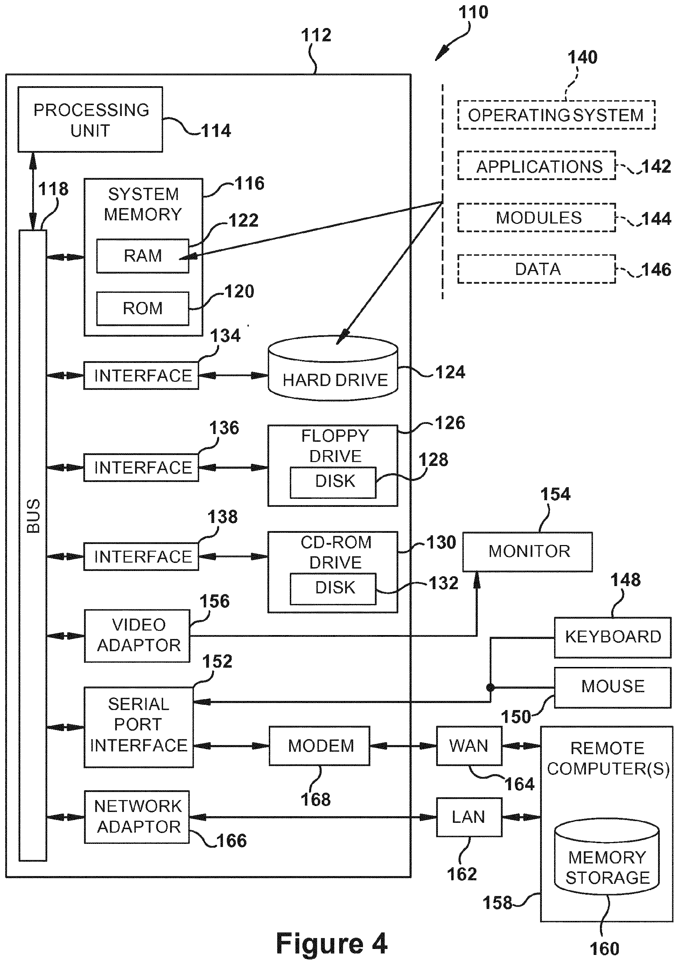

Turning generally now to Figures 2 and 3, exemplary embodiments of the present disclosure provide systems and methods for the allocation of field engineering resources to remote maintenance tasks so that the efficiency is enhanced and/or total cost reduced. As will be seen, the present system may include cloud-based architecture in which a central database interacts with multiple data sources and incorporates real-time data on outages and field engineer availability that is required to optimize the assignment lineup. As will be seen, this may enable more accurate long-term forecasting and planning, as well as improved reaction to changing real-time events. As described in further detail below, an exemplary system of the present invention may include at least one database configured to store data describing and defining maintenance tasks and the available field engineering resources, as well as a computing device containing a data processing unit. In an exemplary system, the database is configured to store data and constraints on both the field engineers and the maintenance tasks associated with customer power plants within a defined territory. In accordance with an exemplary embodiment, as discussed further in relation to Figure 4, the processing unit may be implemented by a computing device, such as a computer having a processor, a non-transitory computer-readable recording memory for tangibly recording thereon a computer program or computer-readable instructions that, when executed by the processor, causes the processing unit to perform the functions, analytics and features described herein. The computing devices respectively embodying the processing unit may also include a working memory that can be used by the respective processor to assist in executing the operative functions, analytics and features of the exemplary embodiments described herein.

Power plants, such as those already discussed, generally adhere to rigorous maintenance plans. This is done to promote continuous, efficient, and safe operation of the power plant, as well as to protect capital investment. As part of such maintenance plans, the power plants undergo regular or periodic planned outages so that one or more maintenance tasks may be performed. During these outages, for example, thermal generating units, such as gas and steam turbines and the components and sub-systems related thereto, are shut down so that inspections may be made, parts replaced, or other procedures performed. In addition, power plants may experience unplanned outages due to unforeseen circumstances, such as component or system malfunction or failure. In either case, such outages typically require one or more field engineers to travel to the power plant site in order to perform one or more maintenance tasks over a prescribed duration or timeframe. To the extent possible, it is desirable to limit the time of the outage so that the negative impact that such shutdowns have on power plant production and revenue is minimized.

In general, it has proved more economical that the highly specialized field engineers who perform these maintenance tasks be organized within field services companies as mobile technical personnel, who the move between assignments at different customer power plants within a defined geographical region. Field engineers, thus, typically service a network or fleet of customer power plants located across a defined territory. As will be appreciated, these defined territories often extend across several different countries. Such field services companies may provide maintenance services to the fleet of power plants pursuant to a contractual service agreement. In order to meet the maintenance needs of the many customer power plants it serves, the field services company typically employs many types of field engineers so that a wide and complete range of services may be offered. The field services company may employ many field engineers having similar skills so that a redundancy of skills accords with potential customer demand. As mentioned, such service companies may include a resource manager who is responsible for managing, mobilizing, scheduling and assigning the field engineers to perform the maintenance tasks that cover planned and unplanned outages of customer power plants located within his defined territory.

In known scheduling systems and methods, as already stated, the resource managers within field services companies manually assign, at least to some extent, the field engineers to the maintenance tasks, both within strategic and operational perspectives. This manual assignment process is cumbersome and complex and, because of this, often results in sub-optimal schedules that increase the operating costs of the field services companies. This is due to the fact that the service companies often employ hundreds of field engineers, and these must be scheduled to handle thousands of maintenance tasks per year. As will be appreciated, doing this type of scheduling manually is a burdensome and time-consuming process, which requires constant changes and updates as day-to-day contingencies arise. Further, when done in this way, costly errors are inevitable. Such errors may include scheduling assignments for a particular engineer that overlap or having one of the maintenance tasks of a customer go unassigned. When these mistakes become known, corrective action-such as borrowing field engineers from outside the territory-are always costly to the company. Other negatives include customer dissatisfaction in the cases where assignments are missed or handled poorly because of such scheduling issues. Employee dissatisfaction is another possible result. That is, when poor scheduling means greater travel or reassignment, this creates a hardship for the affected field engineer and possible dissatisfaction.

According to exemplary embodiments, the scheduling and allocation system of the present invention may schedule and allocate a group of field engineers so to cover maintenance tasks during a predefined planning period in accordance with given task requirements and constraints, and in order to improve or optimize results pursuant to defined objectives. As provided in more detail below, the constraints may include those related to the field engineers (hereinafter "field engineer constraints") as well as those related to the maintenance tasks (hereinafter "task constraints").

According to embodiments of the present invention, such field engineer constraints may include several types of parameters, data, and information that is collected and maintained on each of the field engineers. As already stated, this data and information will be referred to herein as "field engineer constraints" and represents data and information related to whether a field engineer is a viable candidate for a particular assignment, i.e., to perform a particular maintenance task. For example, each field engineer may be characterized by a unique skill set that defines the types of maintenance tasks that he is competent to complete. In addition, each field engineer may have a performance level and/or experience level, which further defines his proficiency and competence to perform certain maintenance task. Field engineer constraints also may include aspects related to availability, which, for example, may include the vacation schedules of the field engineers. Field engineers may become unavailable during certain periods due to the regular technical training sessions that each must attend each year. Such training sessions are necessary, for example, to update a skill the field engineer already possesses or to train the field engineer in a new area. Another of the field engineer constraints that the present system may take into account relates to travel to and from the location of the maintenance task. Given that the territory within which a field engineer operates may extend over several countries and the fact that travel expenses are a significant cost consideration, the constraints in this category may include information such as the location of the field engineer's residence as well as any applicable travel restrictions given nationality. For example, based on the nationality of the field engineers, travel restrictions, such as visa requirements may affect the field engineer's ability to travel to certain countries located outside of a home country. The term "home country" as used herein, is the country out of which the field engineer is based and/or currently resides. Another objective of the present system is to assign field engineers those maintenance tasks at sites located within the field engineer's home country and, within that home country, those subregions that are more conveniently and less expensively reached given the field engineer's particular place of residence. As will be appreciated, this may be used by the field services company to significantly reduce travel distances and related costs, which may have the added effect of enhancing field engineer satisfaction level.

Constraints collected, maintained and stored by the present invention further include tasks constraints, which, as mentioned, are those parameters relating to and describing each of the different maintenance task that may be scheduled within a planning period. As provided in more detail below, the task constraints may include: the type and location of the maintenance task; the required skills to complete the task; and a task timeframe (i.e., the timeframe within which the task is expected to be completed). As provided below, other constraints related to maintenance tasks are also anticipated.

In accordance with other embodiments of the present system, additional types of constraints are also envisioned, as will become more apparent in the discussion below. These may include, for example, cost and other information related to "borrowing" field engineers from outside of the territory to perform a maintenance task within it. Generally, this action incurs a "borrowing" cost and/or high travel costs, which increases overall costs and thereby makes this a disfavored alternative. Accordingly, for example, one objective of the present invention may be to minimize the use of this alternative.

With particular attention now to Figure 2, a system 40 is disclosed for allocating field engineering resources to maintenance tasks based on skill requirements and field engineer availability, while optimizing toward defined objectives such as minimizing operating costs and maximizing localization (i.e., localized assignments). As another possible objective, the present invention may be used operationally so that the reaction to unforeseen day-to-day developments causes minimal modifications to the long-term strategic plan. Other advantages will become apparent to those skilled in the art as this discussion continues with reference to specific exemplary embodiments.

As illustrated, the exemplary system 40 may include at least one database 41 configured to store data that describes and defines maintenance tasks as well as available field engineering resources. According to preferred embodiments, the database 41 is connected to a network that communicates with a field engineering module 42, within which data relating to available field engineering resources is gathered, and a power plant module 43, within which data relating to the maintenance service schedules and the maintenance tasks at the various power plants is gathered. Within each of these modules 42, 43, data may be gathered and ultimately transmitted or uploaded to the database 41 for storage. The database 41 may be a centralized, distributed or cloud based in nature, and may further communicate with at least one processing unit 44 that includes data processing capabilities, as previously discussed, and, as illustrated, a user interface 45. The database 41, as shown, may further communicate with other data resources 46 in a manner consistent with the functionality described herein requires. For example, according to an exemplary embodiment, the field engineering module 42 may connect to a human resources database related to the field services company for determining information related to vacation time for each of the field engineers; a learning and training database for determining the upcoming training schedule for each of the field engineers; an immigration database for visa and travel restriction information for each of the field engineers; and a performance database for determining customer preferences relating to each of the field engineers.

Additionally, in the exemplary system of Figure 2, the database 41 may be configured to store defined data fields on both the field engineers and the maintenance tasks associated with the customer power plants within the relevant territory. As part of the database 41 or as a separate component, the present system 40 may include an optimizer database 47 within which pre-processed data may be held for efficient retrieval and use by an optimizer 48 maintained within the processing unit 44. In accordance with an exemplary embodiment, the processing unit 44 may be implemented by a computing device such as computer having a processor, a non-transitory computer-readable recording memory for tangibly recording thereon a computer program or computer-readable instructions that, when executed by the processor, cause the processing unit 44 to perform the functions, analytics and features, including those of the optimizer 48, as will be further described herein. The computing devices respectively embodying the processing unit 44 may also include a working memory that can be used by the processor to assist in executing the operative functions, analytics and features of the exemplary embodiments described herein, particularly as it relates to calculating an optimized field engineer allocation schedule 49 and communicating it to the resource manager via the user device 45. The user device 45 also may be used by the resource manager to define or choose the objectives according to which the optimization is completed within the optimizer 48 of the processing unit 44.

The optimizer 48 may be used to optimize a defined objective function. As used herein, the objective function includes multiple variables or, as used herein, "decision variables", and is subject to a set of defined constraints. As will be appreciated, the decision variables of the objective function may represent "cost variables", such as labor or travel costs, which the optimizer 48 will generally seek to minimize, or may represent "benefit variables", such as revenue or profit, which the optimizer will generally seek to maximize. Thus, as used herein, the objective function is a mathematical representation of how, for example, a generated allocation schedule performs relative to the defined decision variables. The decision variables may be weighted by coefficients, and these, for example, may be used to reflect a user preference, such has how particular benefits or costs are perceived or valued, and may be modified to reflect relative value changes the user may have between the several decision variables. The objective function may be subject to the many defined constraints that, as already mentioned, primarily relate to the particular maintenance tasks and available field engineers. Other constraints may also be used in the operation of the present invention, and these may relate to any applicable legal, regulatory, environmental, equipment, or physical constraints, and/or any other limitation or boundary placed on the allocation of the field engineers to the maintenance tasks.

Unless otherwise stated, the optimizer 48 of the present invention may optimize the objective function according to conventional systems and methods. As will be appreciated, one common method for optimizing an objective function, for example, is known as "gradient descent optimization." Gradient descent is an optimization algorithm that approaches a local minimum of the objective function by taking steps proportional to the negative of the gradient (or the approximate gradient) of the function at the current point. It should be understood that a number of different optimization techniques may be used depending on the form of the model and the decision variables and constraints. It is contemplated that the present invention may be implemented by using, individually or in combination, a variety of different types of optimization approaches. These optimization approaches include, but not limited to, linear programming, quadratic programming, mixed integer non-linear programming, stochastic programming, global non-linear programming, genetic algorithms, and particle/swarm techniques. According to the present system, the objective function and constraints may be updated continuously so that changes may be handled and incorporated in real time into new allocation schedules that are generated upon a triggering event or defined period. The optimizer 48 then maybe used to recompute the allocation schedule over the strategic planning cycle or operational planning cycle, whatever the case may be. The optimizer 48 may repeat this process for each optimization cycle, thereby, constantly maintaining optimal allocation scheduling as unforeseen outages and other events occur.

According to exemplary embodiments, the optimized field engineer allocation schedule 49, once determined, may be automatically implemented, either in whole or part. Such automatic implementation, for example, may include electronic communications being automatically sent to an intended or designated recipient, such as a field engineer regarding a new assignment, modified assignment, or canceled assignment, as may be put forth in the optimized field engineer allocation schedule 49. As will be appreciated, this may include a notification. According to other possible embodiments, such automatic implementation may include the automatic making, modifying, or canceling of travel reservations for one or more field engineers relative to a new assignment, modified assignment, or canceled assignment, as may be put forth in the optimized field engineer allocation schedule 49. According to still other embodiments, such automatic implementation may include automatic electronic communications with one or more power plant maintenance managers in regard to one or more upcoming maintenance tasks that has been scheduled or proposed or modified from an existing schedule, as may be put forth in the optimized field engineer allocation schedule 49. Additionally, the optimized field engineer allocation schedule 49 may be automatically communicated to the field engineers and maintenance managers via a mobile application that, for example, operates on a smart phone, tablet device, or other computing device.

The field engineering module 42 may include one or more input devices for gathering data related to the field engineers available to the field services company. Such input devices may include the personal computers and/or other electronic devices mentioned herein that are used by the field engineers, as well as those computing devices used by other personnel, such as the resource manager, within the field services company. This type of data may include what was previously referred to herein as parameters or constraints, or, more specifically, field engineer constraints.

As illustrated, the data related to the field engineers may be transferred to a portion of the database 41 for storage and later retrieval. Thus, the present system and method may record and store constraints by which the field engineers are allocated to cover the long-term forecasted maintenance tasks, with respect to strategic planning, as well as for short-term schedule maintenance tasks, with respect to operational planning. Such field engineer constraints may include a field engineering headcount, as well as the several additional types of data on each of the field engineers within that headcount. According to exemplary embodiments, these additional types of data may be broadly grouped into the following categories: skill set; travel; and availability, which are used herein for the purposes of description, but not limitation.

In regard to skill set, information may be collected that indicates the training level, performance level, and/or experience level of each of the field engineers. The information related to training level may indicate the level of training that the field engineer has received and satisfactorily completed, which, as will be discussed more below, may provide an indication as to the types of maintenance task that the field engineer is qualified to handle. The information related to performance level may provide data indicating how well the field engineer is presently performing. The information related to experience level may provide an indication as to the depth of experience that the field engineer has in regard to the handling in the field the various types of maintenance tasks that he is trained to handle. Thus, for example, for a field engineer to be assigned to a particular maintenance task, the present system may first confirm that the field engineer has the skills and training sufficient to handle the assignment, as well as that the field engineer has experience handling that assignment in the field.

In regard to travel, the present system may maintain data on each field engineer related the travel required for him to reach potential assignments. Given that the territory within which the field engineer operates often extends over several countries and the fact that travel expenses are a significant cost consideration, the constraints in this category may include information such as the location of the field engineer's residence as well as any applicable travel restrictions. For example, based on the nationality of the field engineers, travel restrictions, such as visa requirements, may affect the field engineer's ability to travel to certain countries located outside of his home country. Another objective of the present system is to assign field engineers those maintenance tasks at sites located within the field engineer's home country and, within that home country, those subregions that are more conveniently and less expensively traveled to given the field engineer's particular place of residence. As will be appreciated, this may be used by the field services company to significantly reduce travel-related costs.

In regard to availability, the present system may maintain data on each field engineer related to his vacation or training schedules. As mentioned, field engineers may be unavailable for assignments due to a scheduled vacation or the necessary technical training sessions that they regularly have to attend. Another consideration that may be included in this category relates to defined preferences. Such preference constraints may include preferences entered into the system by the field engineer and/or manager regarding the types of assignments or work locations that the field engineer prefers. Such preferences may include favored countries, favored regions, favored subregions, favored customers, favored types of assignments, favored power plant types, volunteer status for particular type of assignments, as well as others. Preference constraints may further include known customer preferences that have been entered into the system. For example, the present system may maintain preference data that describes how a particular power plant customer prefers to have a particular field engineer handle certain types of maintenance tasks. As a further example, a field engineer may use the mobile application to volunteer for work located in a high-risk country. This information may be conveyed through the mobile application to the central database, thereby making known his availability for tasks in that high-risk area. The system may also maintain other types of customer feedback and preferences related to the field engineers, including any that might be "black listed" by a particular customer. A black listed field engineer is one who should not be scheduled to work with a particular customer based on historical customer feedback.

The present invention may further include tasks constraints, which are data and information that relate to the different types of maintenance tasks that may be scheduled at customer power plants. The present invention, thus, may include one or more databases-such as exemplary database 41, which may be centralized, remote, or otherwise configured-that are dedicated to storing task constraint data. Such data may describe and define the type and nature of the maintenance tasks for which the field engineer resources must be allocated over a particular planning cycle. Such task constraints, according to preferred embodiments, may include one or more of the following categories: task type; task location; required task skills; task timeframe; task tool/part requirements; and task history. The task type category provides information relating to the specific type of maintenance procedure that is being scheduled. The task location category relates the location of the power plant at which the maintenance task is being completed. The required task skills category provides the training level and skills needed by the field engineer in order for that field engineer to qualify for a given assignment. The task timeframe category provides information defining the timing of the maintenance task, and may be provided in the form of a start date, an end date, and/or an expected duration for performance. The task tool/part requirements category provides information relating to any special tooling or replacement parts that will be needed for completing the maintenance task. The task history category includes information related to prior completions of the particular maintenance task at the particular power plant, which may relate to customer preferences noted during these prior completions, as well as notes made by a previous field engineer and/or data collected during the prior completions.

In accordance with exemplary embodiments of the present system, additional types of constraints also may be stored in the database 41. These may include, for example, information related to "borrowing" field engineers from outside of the territory to carry out a maintenance task within the territory. For example, this information may include the availability of such outside field engineers, response time, and borrowing cost associated with this action. Such constraints may further include cost data, particularly cost data related to travel of such borrowed engineers. As will be appreciated, this type of data fluctuates frequently, so embodiments of the present invention anticipate frequent periodic updates. This cost data may be used by the optimizer 48 so that economic optimization may be achieved in instances where borrowing a field engineer from outside the territory is a consideration. Another such additional constraint includes travel rules and regulations. As the laws and regulations affecting international travel change with some frequency, the present invention anticipates updating the database 41 frequently so to reflect the most current requirements, thus ensuring the relevance of the generated optimized version of the allocation schedules.

According to other embodiments, the present invention may include other constraints that may be defined by input from the resource manager and incorporated into the optimization process. These, for example, may relate to defining minimum reserve capacities, which is a way for an operator to ensure that the optimized versions of the allocation schedule maintain a defined level of unassigned field engineers. Such unassigned field engineers then are available to handle the unforeseen contingencies, such as unplanned outages, that arise during a planning cycle. Thus, for example, exemplary embodiments of the present invention may permit the user to defined a minimum labor reserve be maintained in the creation of the optimized allocation schedule. Present embodiments may include other types of reserves be defined and incorporated within allocation schedules. These, for example, may include the defining of a durational reserve for a defined subset or all of the maintenance tasks within a planning cycle. A durational reserve may allow for a longer time frame be allowed for the completion of maintenance tasks so that slight overages do not create downstream scheduling issues. Another possible reserve enabled by the present invention relates to the skill level of the field engineer being assigned to the maintenance tasks. In this case, for example, the reserve capacity is one defined within the required minimum skill, experience or performance levels for qualifying field engineers with regard to work for certain customers or assignment types. The present invention further may enable defining a maximum work schedule by a field engineer, which, for example, may be expressed as a maximum work hours within a defined period, such as a week or month. Reserve field engineering resources may be maintained by skill and/or country, with visa and travel restrictions processed in advance so that field engineers are ready for travel should unforeseen contingencies require it.

Configured in this way, the allocation system 40 of the present invention may be used to generate long-term or strategic planning in order to arrive at a strategic allocation schedule. As used herein, the strategic allocation schedule is one that allocates a group of field engineers toward covering forecasted maintenance tasks during a predetermined timeframe, which will be referred to herein as a "strategic planning cycle". According to preferred embodiments, the strategic planning cycle represents a relatively long-term planning timeframe given the nature of resources being allocated. For example, according to exemplary embodiments, the strategic planning cycle may be annual, though other alternatives, such 0.5, 1.5, or 2 years are also possible. As will be appreciated, the present invention may be employed to determine, for example, the minimum number of field engineers (or "headcount") required to perform all of the forecasted maintenance tasks within the strategic planning cycle. The term "forecasted maintenance tasks", as used herein, represents the total number and type of maintenance tasks forecasted or otherwise predicted to take place during the strategic planning cycle within the power plants of the territory. The forecasted maintenance tasks may include both forecasted planned outages and forecasted unplanned outages. Such headcount analysis may assist the field services company plan hiring and/or moving field engineering resources according to skill and/or country.

As will be appreciated, conventional allocation systems struggle with accommodating the late-arriving operational contingencies that, on almost a daily basis, necessitate assignment rescheduling and additional coverage. In addition and complimentary to the strategic planning functionality described above, the present invention may be configured to preform short-term or operational planning in order to arrive at an operational allocation schedule that optimally covers known, anticipated, or scheduled maintenance tasks (hereinafter "scheduled maintenance tasks") within a shorter term cycle, which will be referred to as an "operational planning cycle". As used herein, the operational planning cycle is defined as any current or upcoming sub-period that is delineated within the strategic planning cycle. Such operational planning may include dynamically adjusting the strategic allocation schedule according to changing operational scenarios such that arising contingencies are adequately addressed. For example, this may include: adding to or subtracting from the field engineer headcount; the decision to incur borrowing costs to cover an unanticipated outage event; or the reassignment of field engineers based on scheduled maintenance tasks when those become known or more accurately predicted. As used herein, the term "scheduled maintenance tasks", unless otherwise limited, are those maintenance tasks that become known at a time subsequent to when the forecasted maintenance tasks were estimated. As will be appreciated, the scheduled maintenance tasks reflect those upcoming maintenance tasks that are scheduled to occur within a defined upcoming operational planning cycle, and, thus, are able to be predicted with greater accuracy given the shorter/more current planning window. As will be appreciated, the scheduled maintenance tasks may differ significantly from the forecasted maintenance tasks within a given operational planning cycle, particularly those operational planning cycles occurring late within the overall strategic planning cycle. The operational planning cycle may be relatively short, for example, weekly or monthly. Longer operational planning cycles are also possible, such as, quarterly. As will be appreciated, aspects of the present invention include methods and systems that employ multiple operational planning cycles, some of which operate as sub-cycles within the others.

With specific reference now to Figure 3, a flowchart is presented that illustrates an exemplary method for allocating field engineering resources in accordance with the present invention. As will be appreciated, by providing a method to collect and update the constraints, definitions, allocation rules and/or analytics, problems associated with conventional methods can be avoided or mitigated.

At an initial step 60, a determination may be made as to the planning cycle for which the allocation of field engineering resources will be made. As discussed above, the planning cycle may be a long-term strategic planning cycle or one that is shorter or more operational in nature. The planning cycle may be defined by a user according to present needs.

At a step 61, a determination of the maintenance tasks occurring within the defined planning cycle may be made. As will be appreciated, in cases where the planning cycle is shorter or more operational in length, this determination will include those maintenance tasks that are known, scheduled, or predictably anticipated to occur within the defined planning cycle. In cases where the planning cycle is more long-term and strategic in nature, this determination may be more of a prediction or estimate of the maintenance tasks occurring within the defined planning cycle, and, thus, will be based on many factors. Such factors may include the anticipated service plans of the power plants in the territory, as well as past performance and maintenance schedules of each.

Concurrently, at a step 62, a determination may be made as to the available field engineering resources for the defined planning cycle. In cases where the planning cycle is more operational in nature, this may include determining a total current headcount of field engineers that will be available during the planning cycle. In cases where the planning cycle is more long-term and strategic in nature, this step may include determining the present total headcount of the field engineers and then manipulating that number by any hiring additions/subtractions that are anticipated to occur before or within the planning cycle.

At a step 63, a determination may be made as to all of the applicable task constraints given the maintenance tasks that were determined to occur within the planning cycle. This may include importing all of the data related to the relevant task constraints as maintained with the database, as provided above in relation to Figure 2. Concurrently, at a step 64, a determination may be made as to all of the applicable field engineer constraints given the field engineers that were determined available within the planning cycle. This may include importing all of the field engineer constraints collected and stored within the database, as provided club in relation to Figure 2.

At a step 65, a determination of the objective function may be made under which the optimization will proceed. Then, at a step 66, an optimized version of the allocation schedule may be generated pursuant to known and conventional optimization methods and processes. The optimized version of the allocation schedule may be one that does not violate any of the task constraints or field engineering constraints (or any of the other parameters or constraints that, as mentioned herein, may also be used), while also optimizing in accordance with the defined objective function when compared to other possible or alternative allocation schedules.

At a final step 66, an output of the optimization may be provided. According to alternative embodiments, the present invention may be configured so to enable different outputs. As already discussed, according to one type of output, an optimized strategic schedule may be generated in accordance with one or more defined decision variables within an objective function. Those decision variables may include cost variables and the generated output minimizes total costs to the field services company. According to another example, the objective function may instead be defined in a manner such that one of the decision variables relates to travel localization, which, as used herein, is the extent to which the assignments of the generated schedule result in localized travel for the field engineers. In such a case, the optimization will tend toward an allocation solution that maximizes, or at least partially maximizes, localized travel for the field engineers. As will be appreciated, such a result would generally lower overall travel costs as well as have other benefits related to field engineer job satisfaction. Another included decision variable may relate to borrowing costs, in which case the optimization would generally seek to minimize such costs. In similar fashion, an optimized operational schedule in accordance with those and other decision variables may be generated operationally to handle unforeseen day-to-day happenings. In doing this, the objective function may include a decision variable that reflects the level of disruption that proposed changes would make to a previously generated long-term strategic schedule that is already in place. In such cases, the optimization of the present invention may generally operate to find solutions that minimize such disruption. As will be appreciated, these decision variables may be used in combination so that the optimized solutions found by the present invention are ones that best balance all of the different considerations represented by each of the included decision variables. In such cases, the decision variables may be weighted by user defined coefficients in accordance with user preferences so that the optimized solutions may be made to reflect current or evolving attitudes of the user. This type of functionality also may be used by users to produce "what if" scenarios that, as discussed below, may be used to advise the planning process.

The present invention may further generate outputs for planning purposes. In one such case, for example, optimization may be performed with a decision variable related to minimizing the headcount of the field engineers needed to cover a predicted or hypothetical test set of maintenance tasks. As an exemplary output, the present invention may be used as an advisor for suggesting cross-training for particular field engineers within the available group with new skills so that, for example, operational flexibility within the resulting group is greatly enhanced or a reduction to overall headcount is enabled.

Accordingly, as will be appreciated, the advantages of the present system are several. First, automated scheduling solutions for the assignment of field engineers to maintenance tasks may be optimally provided. Additionally, the look-ahead timeframe for strategic planning may be extended, thereby allowing field services company to better adjust to changing business climates. Further, the present invention provides the ability to make operational changes that are minimally disruptive to longer-term, strategic plans. The present system may also be used as a recommendation engine for long-term planning. For example, exemplary embodiments of the present invention may be used to develop optimal field engineering headcounts and/or hiring plans by country and by skill set. Similarly, planning solutions associated with present system may be used to develop a training schedule for the presently available group of field engineers that improves the its effective utilization rate in the field, which may aid employee growth and business productivity. This may include offering specific cross-training recommendations that pertain to only a limited number of field engineers within the group, which, one completed, offers a disproportionate increase the group's flexibility or ability to handle contingencies during future operational planning cycles. As will be appreciated, this type of analysis may also be done to reduce headcount while maintaining flexibility at present levels.

In order to provide additional context for various aspects of the present invention, Figure 4 is provided as an exemplary computing environment 110 in which various aspects of the present invention may be implemented. It is to be appreciated that the computing environment 110 is exemplary and not intended to limit the computing environments within which the present invention may be employed, except as may be specifically provided in the appended claims. While the invention has been described above in the general context of computer-executable instructions that may run on one or more computers, those skilled in the art will recognize that the invention also may be implemented in combination with other program modules and/or as a combination of hardware and software. Generally, program modules include routines, programs, components, data structures, etc. that perform particular tasks or implement particular abstract data types. Moreover, those skilled in the art will appreciate that the inventive methods may be practiced with other computer system configurations, including single-processor or multiprocessor computer systems, minicomputers, mainframe computers, as well as personal computers, hand-held computing devices, microprocessor-based or programmable consumer electronics, and the like, each of which may be operatively coupled to one or more associated devices. The illustrated aspects of the invention may also be practiced in distributed computing environments where certain tasks are performed by remote processing devices that are linked through a communications network. In a distributed computing environment, program modules may be located in both local and remote memory storage devices.

Figure 4 illustrates one possible hardware configuration to support the systems and methods described herein. It is to be appreciated that although a standalone architecture is illustrated, that any suitable computing environment can be employed in accordance with the present invention. For example, computing architectures including, but not limited to, stand alone, multiprocessor, distributed, client/server, minicomputer, mainframe, supercomputer, digital and analog can be employed in accordance with the present invention.

With reference to Figure 4, an exemplary computing environment 110 for implementing various aspects of the invention includes a computer 112, including a processing unit 114, a system memory 116, and a system bus 118 that couples various system components including the system memory to the processing unit 114. The processing unit 114 may be any of various commercially available processors. Dual microprocessors and other multi-processor architectures also can be used as the processing unit 114.

The system bus 118 may be any of several types of bus structure including a memory bus or memory controller, a peripheral bus, and a local bus using any of a variety of commercially available bus architectures. The computer 112 memory includes read only memory (ROM) 120 and random access memory (RAM) 122. A basic input/output system (BIOS), containing the basic routines that help to transfer information between elements within the computer 112, such as during start-up, is stored in ROM 120.

The computer 112 further includes a hard disk drive 124, a magnetic disk drive 126, e.g., to read from or write to a removable disk 128, and an optical disk drive 130, e.g., for reading a CD-ROM disk 132 or to read from or write to other optical media. The hard disk drive 124, magnetic disk drive 126, and optical disk drive 130 are connected to the system bus 118 by a hard disk drive interface 134, a magnetic disk drive interface 136, and an optical drive interface 138, respectively. The drives and their associated computer-readable media provide nonvolatile storage of data, data structures, computer-executable instructions, etc. for the computer 112, including for the storage of broadcast programming in a suitable digital format. Although the description of computer-readable media above refers to a hard disk, a removable magnetic disk and a CD, it should be appreciated by those skilled in the art that other types of media which are readable by a computer, such as zip drives, magnetic cassettes, flash memory cards, digital video disks, Bernoulli cartridges, and the like, may also be used in the exemplary operating environment, and further that any such media may contain computer-executable instructions for performing the methods of the present invention.

A number of program modules may be stored in the drives and RAM 122, including an operating system 140, one or more application programs 142, other program modules 144, and program non-interrupt data 146. The operating system 140 in the illustrated computer can be any of a number of commercially available operating systems.

A user may enter commands and information into the computer 112 through a keyboard 148 and a pointing device, such as a mouse 150. Other input devices (not shown) may include a microphone, an IR remote control, a joystick, a game pad, a satellite dish, a scanner, or the like. These and other input devices are often connected to the processing unit 114 through a serial port interface 152 that is coupled to the system bus 118, but may be connected by other interfaces, such as a parallel port, a game port, a universal serial bus ("USB"), an IR interface, etc. A monitor 154, or other type of display device, is also connected to the system bus 118 via an interface, such as a video adapter 156. In addition to the monitor, a computer typically includes other peripheral output devices (not shown), such as speakers, printers etc.

The computer 112 may operate in a networked environment using logical connections to one or more remote computers, such as a remote computer(s) 158. The remote computer(s) 158 may be a workstation, a server computer, a router, a personal computer, microprocessor based entertainment appliance, a peer device or other common network node, and typically includes many or all of the elements described relative to the computer 112, although, for purposes of brevity, only a memory storage device 160 is illustrated. The logical connections depicted include a local area network (LAN) 162 and a wide area network (WAN) 164. Such networking environments are commonplace in offices, enterprise-wide computer networks, intranets and the Internet.

When used in a LAN networking environment, the computer 112 is connected to the local network 162 through a network interface or adapter 166. When used in a WAN networking environment, the computer 112 typically includes a modem 168, or is connected to a communications server on the LAN, or has other means for establishing communications over the WAN 164, such as the Internet. The modem 168, which may be internal or external, is connected to the system bus 118 via the serial port interface 152. In a networked environment, program modules depicted relative to the computer 112, or portions thereof, may be stored in the remote memory storage device 160. It will be appreciated that the network connections shown are exemplary and other means of establishing a communications link between the computers may be used.

An exemplary computing environment may further comprise one or more general purpose computing articles of manufacture capable of executing program code, such as the allocation program having the functionality and procedures described herein, that is installed thereon. As used herein, it is understood that "program code" means any collection of instructions, in any language, code or notation, that cause a computing device having an information processing capability to perform a particular action either directly or after any combination of the following: (a) conversion to another language, code or notation; (b) reproduction in a different material form; and/or (c) decompression. Additionally, computer code may include object code, source code, and/or executable code, and may form part of a computer program product when on at least one computer readable medium. It is understood that the term "computer readable medium" may comprise one or more of any type of tangible medium of expression, now known or later developed, from which a copy of the program code may be perceived, reproduced, or otherwise communicated by a computing device. When the computer executes the computer program code, it becomes an apparatus for practicing the invention, and on a general purpose microprocessor, specific logic circuits are created by configuration of the microprocessor with computer code segments. A technical effect of the executable instructions is to implement an allocation method and/or system and/or computer program product that uses models to enhance or augment or optimize operating characteristics so to more efficiently allocated field engineering resources. The computer code of the allocation program may be written in computer instructions executable by the computing system. To this extent, the allocation program executed by the computer system may be embodied as any combination of system software and/or application software. Further, the allocation program may be implemented using a set of modules. In this case, a module may enable the computer system to perform a set of tasks used by allocation program, and may be separately developed and/or implemented apart from other portions of allocation program. As used herein, the term "component" means any configuration of hardware, with or without software, which implements the functionality described in conjunction therewith using any solution, while the term "module" means program code that enables computer system to implement the actions described in conjunction therewith using any solution. When fixed in the memory of the computer system that includes the processor, a module is a substantial portion of a component that implements the actions. Regardless, it is understood that two or more components, modules, and/or systems may share some/all of their respective hardware and/or software. Further, it is understood that some of the functionality discussed herein may not be implemented or additional functionality may be included as part of the computer system. When the computer system comprises multiple computing devices, each computing device may have only a portion of allocation program fixed thereon (e.g., one or more modules). Also, when the computer system includes multiple computing devices, the computing devices may communicate over any type of communications link. Further, while performing a process described herein, the computer system may communicate with one or more other computer systems using any type of communications link.

What has been described above includes examples of the present invention. It is, of course, not possible to describe every conceivable combination of components or methodologies for purposes of describing the present invention, but one of ordinary skill in the art may recognize that many further combinations and permutations of the present invention are possible. Accordingly, the present invention is intended to embrace all such alterations, modifications and variations that fall within the spirit and scope of the appended claims.

Various aspects and embodiments of the present invention are defined by the following clauses:
1. A system for generating an allocation schedule for allocating field engineers to perform maintenance tasks scheduled to occur during a planning cycle at customer power plants dispersed within a territory, the allocation schedule comprising assignments assigning one or more of the field engineers to each of the maintenance tasks, the system comprising:
   a database that stores data related to constraints, the constraints including at least:
      field engineer constraints that define the constraints for each of the field engineers; and
      task constraints that define the constraints for each of the maintenance tasks;
   a computing device containing a processing unit which is configured to:
      receive an input defining the planning cycle;
      receive an input defining an objective function;
      via referencing the data stored in the database, determine an occurring group of the maintenance tasks during the planning cycle;
      via referencing the data stored in the database, determine an available group of the field engineers during the planning cycle;
      via referencing the data stored in the database, import the task constraints that correspond to each of the maintenance tasks of the occurring group of maintenance tasks;
      via referencing the data stored in the database, import the field engineer constraints that correspond to each of the field engineers within the available group of the field engineers; and
      given the imported task constraints and the imported field engineer constraints, generate an optimized version of the allocation schedule pursuant to the objective function.
2. The system according to clause 1, wherein the objective function comprises a mathematical representation for evaluating the allocation schedule relative to defined decision variables; and
   wherein the computing device comprises an optimizer, and the optimized version of the allocation schedule is generated via an optimization process carried out by the optimizer pursuant to the objective function;
   further comprising remote modules for collecting and sending data related to the constraints to the database, the remote modules including at least:
   a field engineering module for collecting and sending data related to the field engineer constraints; and
   a power plant module for collecting and sending data related to the task constraints.
3. The system according to clause 2, wherein the computing device comprises a computer having a processor, a non-transitory computer-readable recording memory that has recorded thereon computer-readable instructions that, when executed by the processor, cause the computing device to perform functions for which the computing device is configured;
   wherein the computer comprises a user interface configured for a user to provide one or more of the inputs; wherein the optimization process comprises one of the following: linear programming; gradient descent optimization; quadratic programming; and mixed integer non-linear programming; and
   wherein the computing device is further configured to output an electronic communication describing the optimized version of the allocation schedule to a remote computing device of a designated recipient.
4. The system according to clause 3, wherein the customer power plants comprise gas turbines and steam turbines; and
   wherein:
   the field engineer constraints comprise information indicating whether each of the field engineers is a viable candidate for completing each of the maintenance tasks; and
   the task constraints comprise information related to requirements associated with performing each of the maintenance tasks.
5. The system according to clause 4, wherein each of the decision variables comprise coefficients for establishing a relative weighting between the decision variables; and
   wherein the computing device is further configured to prompt the user for an input regarding modifying at least one of the coefficients of the decision variables.
6. The system according to clause 4, wherein:
   the field engineer constraints comprise information on each of the field engineers describing at least: a skill set status; a travel status; and an availability status; and
   the task constraints comprise information on each of the maintenance tasks describing at least: a task type; a task location; a required task skill; and a task timeframe.
7. The system according to clause 6, wherein the skill set status comprises a training level, a performance level, and an experience level for each of the field engineers; and
   wherein:
   the training level indicates types of the maintenance tasks that the field engineer is trained to perform;
   the performance level indicates how a current performance level for the field engineer; and
   the experience level indicates types of the maintenance tasks that the field engineer has experience completing;
   wherein the travel status includes information related to requirements for each of the field engineers to travel to locations of the maintenance tasks, including at least:
   a residence location of the field engineer;
   a nationality of the field engineer; and
   international travel restrictions corresponding to the field engineer that affect an ability of the field engineer to travel to the locations of the maintenance tasks; and
   wherein the availability status includes information related to whether the field engineer is available for the maintenance tasks, including at least:
   an indication as to a vacation schedule of the field engineer;
   an indication as to a training schedule of the field engineer; and
   an indication as to preferences of the field engineer.
8. The system according to clause 7, wherein the indication as to the preferences of the field engineer includes at least two of:
   an indication as to an assignment type preferred by the field engineer;
   an indication as to an assignment location preferred by the field engineer;
   an indication as to a customer preferred by the field engineer;
   an indication as to a volunteer status for an assignment type for the field engineer; and
   an indication as to a customer preference for the field engineer.
9. The system according to clause 6, wherein:
   the task type provides information relating to a type of a maintenance procedure and a type of equipment that the maintenance task involves;
   the task location provides information relating to a location of the power plant at which the maintenance task will be performed;
   the required task skill provides information relating to a training level required of the field engineer for assigning the maintenance task; and
   the task timeframe provides information relating to when the maintenance task is scheduled to occur.
10. The system according to clause 9, wherein the task constraints further comprise information on each of the maintenance tasks describing: task tool/part requirements, and a task history; and
   wherein:
   the tool/part requirements provide information relating to tools and part required for completing the maintenance task; and
   the task history provides information relating to prior completions of the maintenance task.
11. The system according to clause 6, wherein the database further stores data related to additional constraints; wherein the computing device is further configured to:
   via referencing the data stored in the database, determine the additional constraints applicable to the planning cycle; and
   via referencing the data stored in the database, import the additional constraints that are determined applicable to the planning cycle; and
   wherein the field engineer constraints, the task constraints, and the additional constraints are taken into account when generating the optimized version of the allocation schedule.
12. The system according to clause 11, wherein the additional constraints comprise:
   information relating to costs for borrowing an outside field engineer from outside of the territory to carry out one of the maintenance tasks within the territory;
   information regarding current cost data related to travel of the field engineers to locations of the customer power plants; and
   information related to current travel regulations affecting international travel within the territory.
13. The system according to clause 12, wherein the additional constraints comprise at least one of:
   a minimum reserve capacity of the field engineers maintained during the planning cycle, the minimum reserve capacity indicating a level unassigned field engineers meant for covering unplanned maintenance tasks occurring within the planning cycle; and
   a maximum work schedule for each of the field engineers over a defined time period.
14. The system according to clause 6, wherein the planning cycle comprise a short-term operational planning cycle of between 1 and 26 weeks, the short-term operational planning cycle being defined as a portion of a pre-existing long-term strategic planning cycle; and
   wherein one of the decision variables of the objective function indicates an extent to which the optimized version of the allocation schedule disrupts the pre-existing allocation schedule.
15. The system according to clause 6, wherein at least one of the decision variables of the objective function indicates a performance of the optimized version of the allocation schedule relative to a localized travel criterion, the localized travel criterion indicating an extent to which the optimized version of the allocation schedule assigns the field engineers to the maintenance tasks that are within a home country of the field engineers; and
   wherein at least one of the decision variables of the objective function indicates a performance of the optimized version of the allocation schedule relative to a labor cost criterion, the labor cost criterion comprising a cost variable indicating a total labor cost for the optimized version of the allocation schedule.
16. The system according to clause 6, wherein at least one of the decision variables of the objective function indicates a performance of the optimized version of the allocation schedule relative to a borrowing cost criterion, the borrowing cost criterion comprising a cost variable relating to costs for borrowing an outside field engineer from outside of the territory to perform one of the maintenance tasks within the territory; and
   wherein at least one of the decision variables of the objective function indicates a performance of the optimized version of the allocation schedule relative to a total headcount criterion, wherein the total headcount criterion comprising a cost variable indicating a total number of the field engineers needed for completing the occurring group of the maintenance tasks.
17. The system according to clause 6, wherein the computing device is further configured to automatically implement at least a portion of the optimized version of the allocation schedule;
   wherein the automatically implementation of the optimized version of the allocation schedule comprises at least one of:
   sending an electronic communication to at least one of the field engineers regarding a new, modified, or canceled assignment for the at least one of the field engineers; and
   sending an electronic communication to a maintenance manager of at least one of the customer power plants regarding a new, modified, or canceled maintenance task at the at least one of the customer power plants.
18. The system according to clause 6, wherein the computing device is further configured to automatically implement at least a portion of the optimized version of the allocation schedule; and
   wherein the automatically implementation of the optimized version of the allocation schedule comprises modifying travel reservations for at least one of the field engineers regarding a new, modified, or canceled assignment for the at least one of the field engineers.
19. A computer-implemented method for allocating field engineers to perform maintenance tasks scheduled to occur during a planning cycle at customer power plants dispersed within a territory, the method including the steps of:
   storing date on a database related to constraints, the constraints including at least:
      field engineer constraints that define the constraints for each of the field engineers; and
      task constraints that define the constraints for each of the maintenance tasks;
   determining, via referencing the data stored in the database, an occurring group of the maintenance tasks during the planning cycle and each of the task constraints that correspond thereto;
   determining, via referencing the data stored in the database, an available group of the field engineers during the planning cycle and each of the field engineer constraints that correspond thereto; and
   given the task constraints determined for the occurring group of the maintenance tasks and the field engineer constraints determined for the available group of the field engineers, generating an optimized version of the allocation schedule via an optimization process pursuant to an objective function.
20. The method according to clause 19, wherein the objective function comprises a mathematical representation for evaluating the allocation schedule relative to defined decision variables;
   further comprising the step of outputting an electronic communication describing the optimized version of the allocation schedule to a remote computing device of a designated recipient.

## Claims

1. A system (10) for generating an allocation schedule (49) for allocating field engineers to perform maintenance tasks scheduled to occur during a planning cycle at customer power plants dispersed within a territory, the allocation schedule (49) comprising assignments assigning one or more of the field engineers to each of the maintenance tasks, the system (10) comprising:
a database (41) that stores data related to constraints, the constraints including at least:
field engineer constraints that define the constraints for each of the field engineers; and
task constraints that define the constraints for each of the maintenance tasks;
a computing device containing a processing unit (44,114) which is configured to:
receive an input defining the planning cycle;
receive an input defining an objective function;
via referencing the data stored in the database (41), determine an occurring group of the maintenance tasks during the planning cycle;
via referencing the data stored in the database (41), determine an available group of the field engineers during the planning cycle;
via referencing the data stored in the database (41), import the task constraints that correspond to each of the maintenance tasks of the occurring group of maintenance tasks;
via referencing the data stored in the database (41), import the field engineer constraints that correspond to each of the field engineers within the available group of the field engineers; and
given the imported task constraints and the imported field engineer constraints, generate an optimized version of the allocation schedule (49) pursuant to the objective function.

2. The system (10) according to claim 1, wherein the objective function comprises a mathematical representation for evaluating the allocation schedule (49) relative to defined decision variables; and
wherein the computing device comprises an optimizer (48), and the optimized version of the allocation schedule (49) is generated via an optimization process carried out by the optimizer (48) pursuant to the objective function;
further comprising remote modules for collecting and sending data related to the constraints to the database (41), the remote modules including at least:
a field engineering module (42) for collecting and sending data related to the field engineer constraints; and
a power plant module (43) for collecting and sending data related to the task constraints.

3. The system (10) according to claim 2, wherein the computing device comprises a computer (112) having a processor, a non-transitory computer-readable recording memory that has recorded thereon computer-readable instructions that, when executed by the processor, cause the computing device to perform functions for which the computing device is configured;
wherein the computer (112) comprises a user interface (45) configured for a user to provide one or more of the inputs; wherein the optimization process comprises one of the following: linear programming; gradient descent optimization; quadratic programming; and mixed integer non-linear programming; and
wherein the computing device is further configured to output an electronic communication describing the optimized version of the allocation schedule (49) to a remote computing device of a designated recipient.

4. The system (10) according to any one of claims 1 to 3, wherein the customer power plants comprise gas turbines and steam turbines; and
wherein:
the field engineer constraints comprise information indicating whether each of the field engineers is a viable candidate for completing each of the maintenance tasks; and
the task constraints comprise information related to requirements associated with performing each of the maintenance tasks.

5. The system (10) according to any one of claims 2 to 4, wherein each of the decision variables comprise coefficients for establishing a relative weighting between the decision variables; and
wherein the computing device is further configured to prompt the user for an input regarding modifying at least one of the coefficients of the decision variables.

6. The system (10) according to any one of claims 1 to 5, wherein:
the field engineer constraints comprise information on each of the field engineers describing at least: a skill set status; a travel status; and an availability status; and
the task constraints comprise information on each of the maintenance tasks describing at least: a task type; a task location; a required task skill; and a task timeframe.

7. The system (10) according to claim 6, wherein the skill set status comprises a training level, a performance level, and an experience level for each of the field engineers; and
wherein:
the training level indicates types of the maintenance tasks that the field engineer is trained to perform;
the performance level indicates how a current performance level for the field engineer; and
the experience level indicates types of the maintenance tasks that the field engineer has experience completing;
wherein the travel status includes information related to requirements for each of the field engineers to travel to locations of the maintenance tasks, including at least:
a residence location of the field engineer;
a nationality of the field engineer; and
international travel restrictions corresponding to the field engineer that affect an ability of the field engineer to travel to the locations of the maintenance tasks; and
wherein the availability status includes information related to whether the field engineer is available for the maintenance tasks, including at least:
an indication as to a vacation schedule of the field engineer;
an indication as to a training schedule of the field engineer; and
an indication as to preferences of the field engineer.

8. The system (10) according to claim 7, wherein the indication as to the preferences of the field engineer includes at least two of:
an indication as to an assignment type preferred by the field engineer;
an indication as to an assignment location preferred by the field engineer;
an indication as to a customer preferred by the field engineer;
an indication as to a volunteer status for an assignment type for the field engineer; and
an indication as to a customer preference for the field engineer.

9. The system (10) according to any one of claims 6 to 8, wherein:
the task type provides information relating to a type of a maintenance procedure and a type of equipment that the maintenance task involves;
the task location provides information relating to a location of the power plant at which the maintenance task will be performed;
the required task skill provides information relating to a training level required of the field engineer for assigning the maintenance task; and
the task timeframe provides information relating to when the maintenance task is scheduled to occur.

10. The system (10) according to any one of claims 1 to 9, wherein the task constraints further comprise information on each of the maintenance tasks describing: task tool/part requirements, and a task history; and wherein:
the tool/part requirements provide information relating to tools and part required for completing the maintenance task; and
the task history provides information relating to prior completions of the maintenance task.

11. The system (10) according to any one of claims 6 to 9, wherein the database (41) further stores data related to additional constraints;
wherein the computing device is further configured to:
via referencing the data stored in the database (41), determine the additional constraints applicable to the planning cycle; and
via referencing the data stored in the database (41), import the additional constraints that are determined applicable to the planning cycle; and
wherein the field engineer constraints, the task constraints, and the additional constraints are taken into account when generating the optimized version of the allocation schedule (49).

12. The system (10) according to claim 11, wherein the additional constraints comprise:
information relating to costs for borrowing an outside field engineer from outside of the territory to carry out one of the maintenance tasks within the territory;
information regarding current cost data related to travel of the field engineers to locations of the customer power plants; and
information related to current travel regulations affecting international travel within the territory.

13. The system (10) according to claim 11 or 12, wherein the additional constraints comprise at least one of:
a minimum reserve capacity of the field engineers maintained during the planning cycle, the minimum reserve capacity indicating a level unassigned field engineers meant for covering unplanned maintenance tasks occurring within the planning cycle; and
a maximum work schedule for each of the field engineers over a defined time period.

14. A computer-implemented method for allocating field engineers to perform maintenance tasks scheduled to occur during a planning cycle at customer power plants dispersed within a territory, the method including the steps of:
storing date on a database (41) related to constraints, the constraints including at least:
field engineer constraints that define the constraints for each of the field engineers; and
task constraints that define the constraints for each of the maintenance tasks;
determining, via referencing the data stored in the database (41), an occurring group of the maintenance tasks during the planning cycle and each of the task constraints that correspond thereto;
determining, via referencing the data stored in the database (41), an available group of the field engineers during the planning cycle and each of the field engineer constraints that correspond thereto; and
given the task constraints determined for the occurring group of the maintenance tasks and the field engineer constraints determined for the available group of the field engineers, generating an optimized version of the allocation schedule (49) via an optimization process pursuant to an objective function.

15. The method according to claim 14, wherein the objective function comprises a mathematical representation for evaluating the allocation schedule (49) relative to defined decision variables;
further comprising the step of outputting an electronic communication describing the optimized version of the allocation schedule (49) to a remote computing device of a designated recipient.
